**Europäisches Patentamt**

**European Patent Office**

**Office européen des brevets**

(19)

(11) Numéro de publication: **0 015 207**
**B1**

(12)
# FASCICULE DE BREVET EUROPEEN

(45) Date de publication du fascicule du brevet:
01.12.82

(51) Int. Cl.³: **B 23 Q 3/06**

(21) Numéro de dépôt: 80400237.6

(22) Date de dépôt: 19.02.80

(54) **Dispositif permettant de maintenir une pièce à usiner dans une position déterminée par rapport à une machine-outil sur laquelle il peut être fixé.**

(30) Priorité: 20.02.79 FR 7904613

(43) Date de publication de la demande:
03.09.80 Bulletin 80/18

(45) Mention de la délivrance du brevet:
01.12.82 Bulletin 82/48

(84) Etats contractants désignés:
AT BE CH DE FR GB IT LU NL SE.

(56) Documents cités:
FR-A-1 234 812
GB-A-1 181 398
GB-A-1 185 702
US-A-1 406 981
US-A-3 312 461

(73) Titulaire: Etablissements BOUCHER Frères Société à responsabilité limitée dite:, F-19130 Vignols Par Objat (FR)

(72) Inventeur: Boucher, Pierre, F-19130 Vignols par Objat (FR)

(74) Mandataire: Roger-Petit, Jean-Camille et al, OFFICE BLETRY 2, Boulevard de Strasbourg, F-75010 Paris (FR)

ACTORUM AG

## Dispositif permettant de maintenir une pièce à usiner dans une position déterminée par rapport à une machine-outil sur laquelle il peut être fixé.

Les dispositifs destinés à maintenir une pièce à usiner dans une position déterminée par rapport à une machine-outil sur laquelle ils peuvent être fixés comportent, de façon usuelle, un mors fixe ayant deux surfaces de référence orthogonales, un mors mobile perpendiculairement à l'une de ces surfaces, et une vis de serrage, également perpendiculaire à cette surface, permettant de serrer la pièce à usiner entre le mors fixe et le mors mobile; ils ne répondent actuellement que très imparfaitement au but recherché; en effet, lorsqu'ils sont soumis à un effort de serrage important, il se produit des fléchissements du corps du mors fixe sur lequel coulisse le mors mobile, et ces fléchissements entraînent des défauts géométriques dans la position des mors; en outre, s'ils sont soumis à une répétition d'efforts, il se produit des déformations permanentes qui rendent permanents ces mêmes inconvénients.

Pour y obvier, on a proposé de renforcer et de soutenir une telle structure par une structure complémentaire destinée à encaisser les réactions des contraintes exercées sur les mors fixe et mobile, et comportant à cet effet une partie avant, contre laquelle prend appui le mors fixe, et une partie arrière, percée d'un orifice taraudé à travers lequel passe, et dans lequel est en prise, le filetage de la vis de serrage du mors mobile.

Dans tous les dispositifs connus jusqu'à ce jour, par exemple comme dans celui décrit dans le brevet GB-A N° 1181398, cette structure complémentaire est constituée par une pièce allongée ayant ses deux extrémités relevées, dont l'une sert d'appui au mors fixe, et dont l'autre est percée d'un orifice taraudé dans lequel est engagée et se trouve en prise la vis de serrage du mors mobile.

Or, quand une telle structure est soumise aux efforts provoqués par un serrage énergique de la vis de serrage, la pièce allongée fléchit, ce qui nuit à l'efficacité du serrage; en outre, cette pièce allongée est de dimensions importantes, et elle nécessite par conséquent qu'une grande échancrure soit prévue dans le corps du mors fixe pour l'y loger, ce qui nuit à la rigidité de ce corps.

La présente invention a pour objet un dispositif permettant de maintenir une pièce à usiner dans une position déterminée par rapport à une machine-outil sur laquelle il peut être fixé, et ce quel que soit le serrage, comportant un mors fixe ayant deux surfaces de référence orthogonales, un mors mobile perpendiculairement à l'une de ces surfaces, et une vis de serrage, également perpendiculaire à cette surface, permettant de serrer la pièce usinée entre le mors fixe et le mors mobile, et comportant en outre une structure destinée à encaisser les réactions des contraintes exercées sur les mors fixe et mobile, cette structure ayant à cet effet une partie avant contre laquelle prend appui le mors fixe et une partie arrière percée d'un orifice taraudé, à travers lequel passe, et dans lequel est en prise, le filetage de la vis de serrage du mors mobile, ladite structure complémentaire étant aménagée de façon à éliminer tous les inconvénients sus-indiqués de celles connues jusqu'à ce jour.

A cet effet, cette structure est constituée par deux brides réunies l'une à l'autre, dans leur partie centrale, par au moins un tirant parallèle à la vis de serrage et, à leur partie inférieure opposée à celle où se trouve la vis de serrage, par au moins une barre de compression.

On conçoit qu'avec un tel agencement de la structure complémentaire, le ou les tirants, parallèles à la vis de serrage, encaissent tous les efforts de traction, et la ou les barres de compression, également parallèles à la vis de serrage, encaissent avec le ou les tirants tous les efforts de compression, sans que ni les uns ni les autres soient soumis à aucun effort de flexion.

Quant aux brides, leur partie centrale est soumise à la force de tension due à la réaction des tirants, et leurs parties supérieure et inférieure à des poussées égales et symétriques qui s'équilibrent, dues à la vis de serrage pour l'une, et à la réaction des barres de compression pour l'autre; ce sont des pièces courtes et massives, qui peuvent être facilement dimensionnées pour que leur fléchissement ne nuise pas à l'efficacité du serrage.

Les tirants et barres de compression, qui ne sont soumis à aucun effort de flexion, peuvent être de faible section, et il en est de même des orifices du corps du mors fixe, à travers lesquels passent librement ces tirants et ces barres; ces orifices n'affaiblissent donc pas le corps du mors fixe, qui n'est soumis à aucun effort de flexion et qui peut donc avoir facilement la rigidité désirée.

Le dessin annexé montre, à titre d'exemple, un mode de réalisation de la présente invention:

la fig. 1 est une vue en plan,

la fig. 2 est une vue en coupe longitudinale faite suivant la ligne II-II de la fig. 1,

la fig. 3 est une vue en coupe transversale faite suivant la ligne III-III de la fig. 1,

la fig. 4 est une vue analogue à celle de la fig. 2 montrant une variante.

La dispositif représenté comporte de façon classique un corps 1 de mors fixe 1a dans lequel sont aménagées des glissières 1b qui guident le coulissement du mors mobile 2 sous l'action de la vis de serrage 3.

Toutefois celle-ci, au lieu d'être en prise avec le taraudage d'un orifice prévu dans une oreille du corps du mors fixe, est engagée et en prise avec le taraudage d'un orifice prévu dans une bride 4, reliée à une contre-bride 5 par des tirants 6 dans leur partie centrale, et par des barres de compression 7 à leur partie inférieure.

Le mors fixe 1 prend appui sur la partie bombée 5a de la contre-bride 5, prévue dans l'axe de la vis de serrage 3, et la barre de compression sur son autre partie bombée 5b, symétrique de la précédente par rapport au tirant 6.

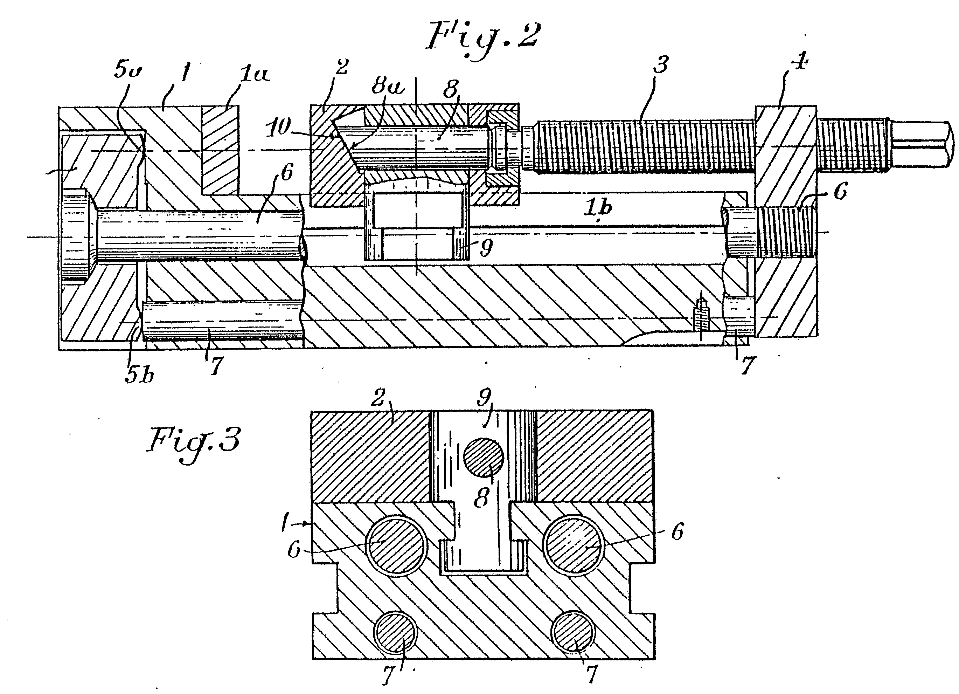

En fait, comme le montre la fig. 3, il y a deux tirants 6, symétriques par rapport au plan de symétrie des mors fixe 1 et mobile 2 passant par l'axe de la vis de serrage, et deux barres de poussée 7 symétriques par rapport à ce même plan.

Le plan contenant les barres de traction 6 se trouve entre le plan contenant les barres de compression 7 et l'axe de la vis de serrage 3. Ce plan se trouve à mi-distance du plan contenant les barres de compression 7 et de l'axe de la vis de serrage 3, sans constituer une obligation.

Les tirants 6 et barres de compression 7 ne sont soumis qu'à des forces axiales, et à aucun effort de flexion, et les brides 4 et 5 sont des pièces distinctes, courtes et massives, soumises à des forces bien équilibrées; l'ensemble des déformations de ce dispositif provoque lors du serrage un libre coulissement axial des tirants 6 et des barres de compression 7; seule la partie bombée 5a de la contre-bride 5, sur laquelle prend appui le corps 1 du mors fixe 1a, demeure dans sa position initiale.

Dans ces conditions, quelle que soit la puissance de serrage, il n'y a aucune possibilité de déformation du corps 1 du mors fixe, qui n'est soumis à aucun effort de flexion.

Les tirants 6, qui peuvent être de faible diamètre puisqu'ils ne sont soumis qu'à des forces de traction, traversent librement des trous percés à cet effet dans le corps 1 du mors fixe; les barres de compression 7, soumises seulement à des forces de compression, traversent également librement des trous percés à cet effet dans le corps 1, mais tels qu'ils évitent toute possibilité de flambage.

Dans le prolongement de la vis de serrage 3, un piston 8 est logé dans un orifice correspondant du mors mobile 2 et de la chape 9; celle-ci a une section droite en forme de H lui permettant de coulisser sur les glissières 1b du corps 1 du mors fixe; l'extrémité 8a du piston 8 est inclinée de bas en haut d'arrière en avant, et elle prend appui sur une face 10, de même inclinaison, du mors mobile 2.

De la sorte, lors du début de serrage, le mors mobile 2 est appliqué contre les faces de guidage supérieures du coulissement du mors mobile 2 sur le corps 1 du mors fixe, et ensuite, par réaction, le piston 8 soulève la chape 9 et maintient donc son épaulement inférieur appliqué contre les faces de guidage inférieures du coulissement du mors mobile 2 sur le corps 1 du mors fixe.

L'extrémité antérieure 8a du piston 8 portant contre la surface 10 de même inclinaison du mors mobile 2, la résultante des forces de poussée exercées par la vis de serrage 3 sur le mors mobile est axiale, et dirigée vers la partie bombée 5a de la bride 5 contre laquelle porte la partie arrière du corps du mors fixe 1a.

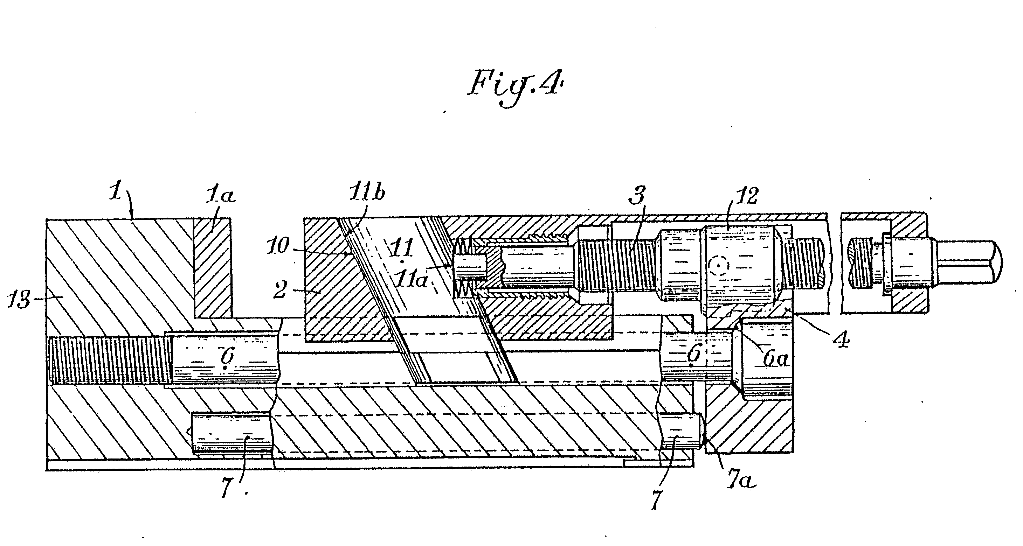

Dans la variante représentée à la fig. 4, l'extrémité inclinée de la vis de serrage 3 est constituée par la chape 11, également en forme de H, qui diffère de la chape 9 en ce qu'elle est constituée par un cylindre incliné, au lieu de l'être par un cylindre droit, comme la chape 9; sa face arrière comporte un méplat 11a, sur lequel porte l'extrémité de la vis de serrage 3, et sa face antérieure inclinée 11b coopère avec une face 10 de même inclinaison de l'orifice du mors mobile 2, dans lequel cette chape 11 peut librement coulisser, pour produire le même résultat que la face inclinée 8a du piston 8 coopérant avec la face 10 de même inclinaison du mors mobile 2 dans le mode de réalisation décrit ci-dessus.

Pour éviter toutes possibilités de coincement, la vis de serrage 3 est engagée et en prise avec un écrou 12 monté à rotule dans la bride 4.

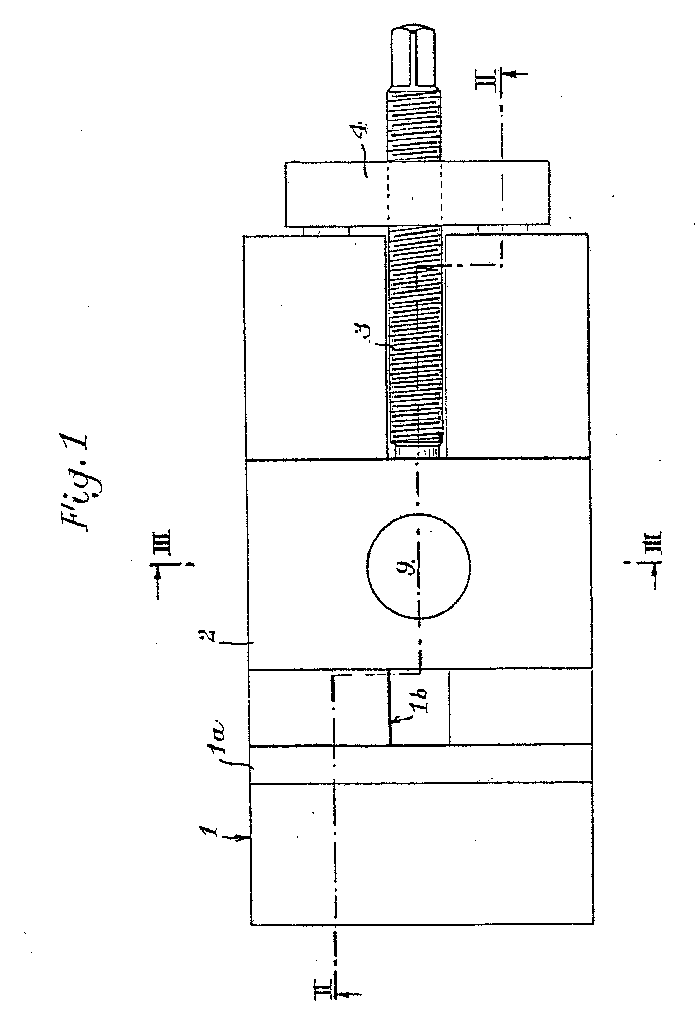

Dans certains cas où une moins grande précision est suffisante, la bride 5 peut être constituée par la partie arrière 13 du corps 1 du mors fixe 1a, comme le montre également la fig. 4; elle est également soumise à la tension exercée par les tirants 6, contre-balançant les poussées exercées par la vis de serrage 3 et les barres de compression 7, comme l'est la bride 5 des fig. 1 à 3.

Ce sont alors les extrémités des tirants 6 du côté de la bride 4 qui sont montés à rotule en 6a, sur ladite bride 4, de même que les extrémités 7a des barres de compression 7, de façon à éviter tout risque de coincement de ces tirants 6 et barres de compression 7 dans les trous correspondants du corps 1 du mors 1a.

Il est bien entendu que le mode de réalisation de l'invention qui a été décrit ci-dessus en référence au dessin annexé a été donné à titre purement indicatif et nullement limitatif.

## Revendications

1. Dispositif permettant de maintenir une pièce à usiner dans une position déterminée par rapport à une machine-outil sur laquelle ce dispositif peut être fixé, et ce quel que soit le serrage, comportant un mors fixe (1) ayant deux surfaces de référence orthogonales, un mors mobile (2) perpendiculairement à l'une de ces surfaces, et une vis de serrage (3), également perpendiculaire à cette surface, permettant de serrer la pièce usinée entre le mors fixe et le mors mobile, et comportant en outre une structure destinée à encaisser les réactions des contraintes exercées sur les mors fixe et mobile, cette structure ayant à cet effet une partie avant (5) contre laquelle prend appui le mors fixe et une partie arrière (4) percée d'un orifice taraudé, à travers lequel passe, et dans lequel est en prise, le filetage de la vis de serrage (3) du mors mobile, caractérisé en ce que la partie avant et la partie arrière de cette structure sont constituées chacune par une bride (4 et 5), et ces deux brides sont réunies l'une à l'autre, dans leur partie centrale, par au moins un tirant (6) parallèle à la vis de serrage (3), et à leur partie inférieure, opposée à celle où se trouve la vis de serrage, par au moins une barre de compression (7).

2. Dispositif suivant la revendication 1, caractérisé en ce que les barres de traction (6) passent librement à travers des trous prévus dans le corps (1) du mors fixe (1a).

3. Dispositif suivant l'une quelconque des revendications 1 ou 2, caractérisé en ce que les barres de compression (7) passent librement à travers des trous prévus dans le corps (1) du mors fixe (1a).

4. Dispositif suivant l'une quelconque des revendications 1 à 3, caractérisé en ce que les tirants (6) sont au nombre de deux, symétriques par rapport au plan de symétrie des mors fixe (1) et mobile (2) passant par la vis de serrage 3.

5. Dispositif suivant l'une quelconque des revendications 1 à 4, caractérisé en ce que les barres de compression (7) sont au nombre de deux, symétriques par rapport au plan de symétrie des mors fixe (1a) et mobile (2) passant par la vis de serrage 3.

6. Dispositif suivant l'une quelconque des revendications 1 à 5, caractérisé en ce que les barres de traction (6) se trouvent dans un plan situé à égale distance du plan passant par les barres de compression de la vis de serrage (3).

7. Dispositif suivant l'une quelconque des revendications 1 à 6, caractérisé en ce que le corps (1) du mors fixe prend appui contre une partie bombée (5a) de la bride (5) située dans l'axe de la vis de serrage (3).

8. Dispositif suivant l'une quelconque des revendications 1 à 7, caractérisé en ce que les barres de compression (7) prennent appui contre une partie bombée de la bride (5b) située dans le prolongement de leur axe.

9. Dispositif suivant l'une quelconque des revendications 1 à 8, caractérisé en ce que la bride (5) est constituée par la partie arrière (13) du corps (1) du mors fixe (1a).

10. Dispositif suivant l'une quelconque des revendications 1 à 8, dans lequel le prolongement de la vis de serrage (3) comporte une surface (8a ou 11b) inclinée de bas en haut, d'arrière en avant, au contact d'une surface de même inclinaison (10) du mors mobile (2), par l'intermédiaire desquelles la vis exerce sa poussée sur le mors mobile, caractérisé en ce que les sections de contact de ces deux surfaces sont symétriques par rapport à l'axe de la vis de serrage.

11. Dispositif suivant la revendication 10, caractérisé en ce qu'une chape (9), coulissant librement vers le haut ou vers le bas dans un orifice correspondant du mors mobile (2), a une extrémité inférieure en forme de H coulissant sur les glissières (1b) du corps (1) du mors fixe (2), et est sollicitée vers le haut par la réaction de la poussée de la partie antérieure inclinée (8a ou 11b) du prolongement de la vis de serrage (3) sur la surface (10) de même inclinaison du mors mobile (2).

## Claims

1. A device enabling a workpiece to be machined to be maintained in a fixed position with respect to a machine tool on which this device may be fixed whatever the type of clamping, comprising a fixed jaw having two perpendicular reference surfaces, a jaw which is perpendicularly movable with respect to one of these surfaces, and a clamping screw which is also perpendicular to this surface and enables the machined workpiece to be clamped between the fixed jaw and the movable jaw, and further comprising a construction designed to take up the reactions of the stresses exerted on the fixed and movable jaws, this construction being provided for this purpose with a front portion against which the fixed jaw is supported and a rear portion provided with a threaded orifice through which passes and in which is engaged the thread of the clamping screw of the movable jaw, characterized in that the front portion and the rear portion of this construction are each constituted by a flange (4) and (5), and in that these two flanges are connected to one another, in their central portions, by at least one brace (6) parallel to the clamping screw (3), and at their lower portions, opposite to those in which the clamping screw is disposed, by at least one compression bar (7).

2. A device as claimed in claim 1, characterized in that the traction bars (6) pass freely through holes provided in the body (1) of the fixed jaw (1a).

3. A device as claimed in any one of claims 1 or 2, characterized in that the compression bars (7) pass freely through holes provided in the body (1) of the fixed jaw (1a).

4. A device as claimed in any one of claims 1 to 3, characterized in that there are two braces which are symmetrical with respect to the plane of the fixed (1) and movable (2) jaws passing through the clamping screw (3).

5. A device as claimed in any one of claims 1 to 4, characterized in that there are two compression bars (7) which are symmetrical with respect to the plane of symmetry of the fixed (1a) and movable (2) jaws passing through the clamping screw (3).

6. A device as claimed in any one of claims 1 to 5, characterized in that the traction bars (6) are disposed in a plane located at the same distance from the plane passing through the compression bars of the clamping screw (3).

7. A device as claimed in any one of claims 1 to 6, characterized in that the body (1) of the fixed jaw is supported against a dished portion (5a) of the flange (5) disposed in the axis of the clamping screw (3).

8. A device as claimed in any one of claims 1 to 7, characterized in that the compression bars (7) are supported against a dished portion of the flange (5b) located in the extension of their axis.

9. A device as claimed in any one of claims 1 to 8, characterized in that the flange (5) is constituted by the rear portion (13) of the body (1) of the fixed jaw (1a).

10. A device as claimed in any one of claims 1 to 8 in which the extension of the clamping screw (3) comprises a surface (8a or 11b) which is upwardly inclined from the rear towards the front and in contact with a surface having the same inclination (10) of the movable jaw (2), by means of which the screw exerts its thrust on the movable jaw, characterized in that the contacting sections of these two surfaces are symmetrical with respect to the axis of the clamping screw.

11. A device as claimed in claim 10, characterized in that a fork (9) sliding freely upwardly or downwardly in a corresponding orifice of the

movable jaw (1a) has a lower end in the shape of an H sliding on the guideways (1b) of the body (1) of the fixed jaw (2) and is upwardly stressed by the reaction of the thrust of the front inclined portion (8a) or (11b) of the extension of the clamping screw (3) on the surface (10) having the same inclination as the movable jaw (2).

## Patentansprüche

1. Vorrichtung zum Festhalten eines Werkstückes in einer bestimmten Position in bezug auf eine Werkzeugmaschine, an der die Vorrichtung befestigt werden kann, dies unabhängig von der Art der Aufspannung, mit einer feststehenden Spannbacke mit zwei orthogonalen Bezugsflächen, einer rechtwinkelig zu einer dieser Flächen beweglichen Spannbacke und einer ebenfalls zu dieser Fläche rechtwinkeligen Spannschraube, die es gestattet, das Werkstück zwischen die feste Spannbacke und die bewegliche Spannbacke einzuspannen, und ferner mit einem Rahmen zur Aufnahme der Reaktionskräfte der auf die feste und auf die bewegliche Spannbacke ausgeübten Spannkräfte, der hierzu ein Vorderteil, gegen das sich die feste Spannbacke abstützt, und ein Endteil mit einem Gewindeloch hat, durch das das Gewinde der Spannschraube der beweglichen Spannbacke hindurch verläuft und in welchem dieses Gewinde aufgenommen ist, dadurch gekennzeichnet, dass das Vorderteil und das Endteil dieses Rahmens jeweils aus einem Flansch (4, 5) bestehen, und dass diese beiden Flansche in ihrem Mittelstück durch mindestens eine zu der Spannschraube (3) parallele Zugstange (6) und in ihrem unteren Teil gegenüber demjenigen, in welchem sich die Spannschraube befindet, durch mindestens einen Druckstab (7) miteinander verbunden sind.

2. Vorrichtung nach Anspruch 1, dadurch gekennzeichnet, dass die Zugstangen (6) frei durch im Körper (1) der festen Spannbacke (1a) vorgesehene Löcher hindurch verlaufen.

3. Vorrichtung nach einem der Ansprüche 1 oder 2, dadurch gekennzeichnet, dass die Druckstäbe (7) frei durch im Körper (1) der festen Spannbacke (1a) vorgesehene Löcher hindurch verlaufen.

4. Vorrichtung nach einem der Ansprüche 1 bis 3, dadurch gekennzeichnet, dass zwei Zugstangen (6) vorgesehen sind, die symmetrisch in bezug auf die durch die Spannschraube (3) verlaufende Symmetrieebene der festen Spannbacke (1) und der beweglichen Spannbacke (2) liegen.

5. Vorrichtung nach einem der Ansprüche 1 bis 4, dadurch gekennzeichnet, dass zwei Druckstäbe (7) vorgesehen sind, die symmetrisch in bezug auf die durch die Spannschraube (3) verlaufende Symmetrieebene der festen Spannbacke (1) und der beweglichen Spannbacke (2) liegen.

6. Vorrichtung nach einem der Ansprüche 1 bis 5, dadurch gekennzeichnet, dass die Zugstangen (6) in einer Ebene liegen, die gleichen Abstand von der durch die Druckstäbe verlaufenden Ebene und von der Spannschraube (3) hat.

7. Vorrichtung nach einem der Ansprüche 1 bis 6, dadurch gekennzeichnet, dass sich der Körper (1) der festen Spannbacke gegen einen in der Achse der Spannschraube (3) liegenden, bombierten Teil (5a) des Flansches (5) abstützt.

8. Vorrichtung nach einem der Ansprüche 1 bis 7, dadurch gekennzeichnet, dass sich die Druckstäbe (7) gegen einen in der Verlängerung ihrer Achse liegenden, bombierten Teil (5b) des Flansches (5) abstützen.

9. Vorrichtung nach einem der Ansprüche 1 bis 8, dadurch gekennzeichnet, dass der Flansch (5) aus dem hinteren Teil (13) des Körpers (1) der festen Spannbacke (1a) besteht.

10. Vorrichtung nach einem der Ansprüche 1 bis 8, wobei die Verlängerung der Spannschraube (3) eine von unten nach oben von hinten nach vorn geneigte Oberfläche (8a) oder (11b) aufweist, die sich in Berührung mit einer ebenso geneigten Oberfläche (10) der beweglichen Spannbacke (2) befindet, über welche Flächen die Schraube ihren Druck auf die bewegliche Spannbacke ausübt, dadurch gekennzeichnet, dass die Kontaktbereiche dieser beiden Oberflächen symmetrisch in bezug auf die Achse der Spannschraube sind.

11. Vorrichtung nach Anspruch 10, dadurch gekennzeichnet, dass ein Klotz (9), der in einer entsprechenden Öffnung der beweglichen Backe (2) frei nach oben oder unten gleitet, ein unteres, H-förmiges Ende hat, das auf den Gleitführungen (1b) des Körpers (1) der festen Spannbacke (1a) gleitet, und durch die Reaktionskraft des Druckes des nach vorn geneigten Teils (8a) oder (11b) der Verlängerung der Spannschraube (3) auf die gleichsinnig geneigte Oberfläche (10) der beweglichen Spannbacke (2) nach oben belastet wird.

*Fig. 1*

Fig.2

Fig.3

Fig.4